# EUROPÄISCHE PATENTSCHRIFT

(11) **EP 2 574 636 B1**
(45) Veröffentlichungstag und Bekanntmachung des Hinweises auf die Patenterteilung: **16.04.2014**
(21) Anmeldenummer: 11183537.7
(22) Anmeldetag: 30.09.2011
(51) Int. Cl.: C08F 216/14, C08F 220/28, C04B 24/26, C08F 290/14

(54) **Schnell suspendierbare pulverförmige Zusammensetzung**
Quickly suspending power-form compound
Composition sous forme de poudre pouvant être rapidement mise en suspension

(43) Veröffentlichungstag der Anmeldung: 03.04.2013
(73) Patentinhaber: BASF Construction Solutions GmbH, 83308 Trostberg (DE)
(72) Erfinder: Bichler, Manfred, 84549 Engelsberg (DE); Schinabeck, Michael, 83352 Altenmarkt (DE); Steidl, Norbert, 83361 Kienberg (DE); Strauss, Werner, 83278 Traunstein (DE); Maier, Markus, 83703 Gmund am Tegernsee (DE); Wilde, Markus, 89231 Neu-Ulm (DE)
(74) Vertreter: Gastner, Thomas

(56) Entgegenhaltungen:
- EP-A1- 1 260 535
- WO-A1-2010/066576
- WO-A1-2011/104590

## Beschreibung

Die Erfindung betrifft eine schnell suspendierbare pulverförmige Zusammensetzung, welche durch in Kontakt bringen eines Pulvers, welches mindestens ein anorganisches Bindemittel umfasst, mit einer flüssigen Komponente, enthaltend mindestens ein Copolymer und ein organisches Lösungsmittel, herstellbar ist. Weiterhin werden ein Verfahren zur Herstellung der flüssigen Komponente und deren Verwendung offenbart.

Um eine verbesserte Verarbeitbarkeit, d. h. Knetbarkeit, Streichfähigkeit, Spritzbarkeit, Pumpbarkeit oder Fließfähigkeit, anorganischer Feststoffsuspensionen zu erreichen, werden diesen oft Zusatzmittel in Form von Dispergier- oder Fließmitteln zugesetzt. Derartige anorganische Feststoffe umfassen in der Bauindustrie meistens anorganische Bindemittel wie z.B. Zement auf Basis Portlandzement (EN 197), Zement mit besonderen Eigenschaften (DIN 1164), Weißzement, Calciumaluminatzement bzw. Tonerdezement (EN 14647), Calciumsulfoaluminatzement, Spezialzemente, Calciumsulfat-n-Hydrat (n=0 bis 2), Kalk bzw. Baukalk (EN 459) sowie Puzzolane bzw. latent hydraulische Bindemittel wie z. B. Flugasche, Metakaolin, Silicastaub, Hüttensand. Weiterhin enthalten die anorganischen Feststoffsuspensionen in der Regel Füllstoffe, insbesondere Gesteinskörnung bestehend aus z. B. Calciumcarbonat, Quarz oder anderen natürlichen Gesteinen verschiedener Korngröße und Kornform sowie weitere anorganische und/oder organische Additive (Zusatzmittel) zur gezielten Beeinflussung von Eigenschaften bauchemischer Produkte z. B. Hydratationskinetik, Rheologie oder Luftgehalt. Außerdem können organische Bindemittel wie z. B. Latexpulver enthalten sein.

Um Baustoffmischungen, insbesondere auf Basis von anorganischen Bindemitteln in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Baukörper führt zu einer signifikant verschlechterten mechanischen Festigkeit, Beständigkeit und Dauerhaftigkeit.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im allgemeinen in der Bauchemie als Wasserreduktions- oder Fließmittel bezeichnet werden. Als derartige Mittel sind vor allem Polykondensationsprodukte auf Basis von Naphthalin- oder Alkylnaphthalinsulfonsäuren bzw. Sulfonsäuregruppen enthaltende Melamin-Formaldehydharze bekannt.

Baustoffe. Diese Zusatzmittel werden zur Verbesserung der Fließfähigkeit der Bindemittel wie z. B. Zement, Anhydrit oder Gips sowie den damit hergestellten Baustoffen beschrieben.

DE 2948698 beschreibt hydraulische Mörtel für Estriche, die Fließmittel auf Basis von Melamin-Formaldehyd-Kondensationsprodukten und/oder sulfonierte Formaldehyd-Naphthalinkondensate und/oder Ligninsulfonat und als Binder Portlandzement, tonhaltiger Kalkmergel, Ton- und Schwachbrandklinker enthalten.

Neben den rein anionischen Fließmitteln, die im wesentlichen Carbonsäure- und Sulfonsäuregruppen enthalten, werden als neuere Gruppe von Fließmitteln schwach anionische Kammpolymere beschrieben, die üblicherweise anionische Ladungen an der Hauptkette tragen und nichtionische Polyalkylenoxidseitenketten enthalten.

WO 01/96007 beschreibt diese schwach anionischen Fließ- und Mahlhilfsmittel für wässrige Mineralsuspensionen, die durch radikalische Polymerisation von Vinylgruppen enthaltenden Monomeren hergestellt werden und die als eine Hauptkomponente Polyalkylenoxidgruppen enthalten.

DE 19513126 und DE 19834173 beschreiben Copolymere auf Basis von ungesättigten Dicarbonsäurederivaten und Oxyalkylenglykol-Alkenylethern und deren Verwendung als Zusatzmittel für hydraulische Bindemittel, insbesondere Zement.

WO2011/104590 offenbart Polymerisate aus der Basis von Monomere wie zb. Estern aus Acrylsäure und Alkylpolyalkylenglykol und (Meth)acrylsäure, und die Benutzung von Wässrige Lösungen enthaltend solche Polymerisate als Dispergiermittel für Hydraulische Bindmittel.

WO 2010/066576 beschreibt Copolymere auf der Basis von Monomere wie Vinyloxybutylpolyethyleneglykol und Acrylsäure und die Verwendung solche Polymere als Dispergiermittel für hydraulische Bindemittel.

Ziel der Zugabe von Fließmitteln in der Bauindustrie ist entweder die Plastizität des Bindemittelsystems zu erhöhen oder die benötigte Wassermenge bei gleichen Verarbeitungsbedingungen zu reduzieren.

Es hat sich gezeigt, dass Fließmittel auf Basis von Ligninsulfonat, Melaminsulfonat und Polynaphthalinsulfonat den schwach anionischen, polyalkylenoxidhaltigen Copolymeren in ihrer Wirksamkeit deutlich unterlegen sind. Diese Copolymere werden auch als Polycarboxylatether (PCE) bezeichnet. Polycarboxylatether dispergieren die anorganischen Partikel nicht nur über elektrostatische Aufladung aufgrund der an der Hauptkette enthaltenen anionischen Gruppen (Carboxylatgruppen, Sulfonatgruppen), sondern stabilisieren zusätzlich die dispergierten Teilchen durch sterische Effekte aufgrund der Polyalkylenoxid-Seitenketten, die durch Absorption von Wassermolekülen eine stabilisierende Schutzschicht um die Partikel bilden.

Dadurch kann entweder die benötige Menge Wasser für das Einstellen einer bestimmten Konsistenz gegenüber den klassischen Fließmitteln reduziert werden oder aber die Plastizität der feuchten Baustoffmischung wird durch die Zugabe der Polycarboxylatether so weit reduziert, dass selbstverdichtender Beton oder selbstverdichtender Mörtel bei niedrigen Wasser/Zement-Verhältnissen hergestellt werden kann. Auch ermöglicht die Verwendung der Polycarboxylatether die Herstellung von Transportbeton oder Transportmörtel, der über längere Zeiträume pumpbar bleibt oder die Herstellung von hochfesten Betonen oder hochfesten Mörteln durch die Einstellung eines niedrigen Wasser/Zement-Verhältnisses.

Neben den beschriebenen Polycarboxylatethern sind inzwischen auch eine Reihe von Derivaten mit modifiziertem Wirkungsprofil bekannt. So beschreibt beispielsweise die US 2009312460 Polycarboxylatester, wobei die Esterfunktion nach Einbringen in eine zementäre, wässrige Mischung hydrolysiert wird und hierdurch ein Polycarboxylatether gebildet wird. Polycarboxylatester haben den Vorteil, dass sie ihre Wirkung erst nach einiger Zeit in der zementären Mischung entfalten und hierdurch die dispergierende Wirkung über einen längeren Zeitraum aufrechterhalten werden kann.

Dispergiermittel auf Basis von Polycarboxylatethern und deren Derivate werden entweder als Feststoff in Pulverform oder als wässrige Lösung angeboten. Pulverförmige Polycarboxylatether können beispielsweise einem Werktrockenmörtel bei dessen Herstellung zugemischt werden. Beim anmachen des Werktrockenmörtels mit Wasser lösen sich die Polycarboxylatether und können nachfolgend ihre Wirkung entfalten.

Alternativ ist es auch möglich, Polycarboxylatether oder deren Derivate der anorganischen Feststoffsuspension in gelöster Form zuzusetzen. Insbesondere kann das Dispergiermittel direkt in das Anmachwasser dosiert werden.

Alle bisher bekannten Verfahren Fließmittel in eine anorganische Feststoffsuspension einzubringen haben jedoch den Nachteil, dass die dispergierende Wirkung sich nicht unmittelbar nach Zugabe des Anmachwassers entfaltet. Unabhängig davon ob das Dispergiermittel als Pulver oder in wässriger Lösung zugesetzt wird, kann es beispielsweise bei einem Trockenmörtel - je nach Wasser zu Zement Verhältnis (w/z Wert) bzw. Wasseranspruch - über 100 Sekunden dauern, bis man nach Zugabe des Anmachwassers unter starkem Rühren eine homogene Suspension erhält. Dies ist insbesondere bei der Verwendung von Mischpumpen problematisch.

Aufgabe der vorliegenden Erfindung war es demzufolge, pulverförmige Zusammensetzungen auf Basis anorganischer Bindemittelsysteme zur Verfügung zu stellen, die sich schneller mit Wasser homogen dispergieren lassen, als dies mit den bisher bekannten Zusammensetzungen möglich war.

Gelöst wurde diese Aufgabe durch eine pulverförmige Zusammensetzung, herstellbar durch in Kontakt bringen eines Pulvers, welches mindestens ein anorganisches Bindemittel umfasst, mit
0,01 bis 10 Gew.-%, insbesondere 0,05 bis 5 Gew.-% und besonders bevorzugt 0,1 bis 2 Gew.-%, bezogen auf die Gesamtmasse der Zusammensetzung, einer flüssigen

Komponente, umfassend mindestens ein Copolymer, welches erhältlich ist durch Polymerisation einer Mischung von Monomeren, umfassend
(I) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst und
(II) mindestens ein ethylenisch ungesättigtes Monomer mit einem Polyalkylenoxid-Rest, wobei die flüssige Komponente mindestens 1 Gew.-%, bevorzugt zwischen 5 und 60 Gew.-%, insbesondere zwischen 25 und 50 Gew.-% des mindestens einen Copolymers und mindestens 30 Gew.-%, bevorzugt zwischen 98 und 35 Gew.-%, insbesondere zwischen 90 und 40 Gew.-% und besonders bevorzugt zwischen 80 und 50 Gew.-% eines organischen Lösungsmittels enthält.

Überraschend hat sich hierbei ergeben, dass nicht nur die gestellte Aufgabe in vollem Umfang gelöst werden konnte, sondern dass die pulverförmige Zusammensetzung neben der hervorragenden Dispergierbarkeit gleichzeitig ausgezeichnete Verarbeitungseigenschaften aufweist. Insbesondere konnte eine deutliche Reduzierung der Staubbildung bei der Handhabung der pulverförmige Zusammensetzung beobachtet werden. Weiterhin überraschend war, dass die Lagerfähigkeit der erfindungsgemäßen pulverförmige Zusammensetzung durch die flüssige Komponente nicht oder nicht wesentlich verschlechtert wurde.

Die Copolymere entsprechend der vorliegenden Erfindung enthalten mindestens zwei Monomerbausteine. Es kann aber auch vorteilhaft sein, Copolymere mit drei oder mehr Monomerbausteinen zu verwenden.

In einer bevorzugten Ausführungsform wird das ethylenisch ungesättigte Monomer (I) durch mindestens eine der folgenden allgemeinen Formeln aus der Gruppe (Ia), (Ib) und (Ic) repräsentiert:

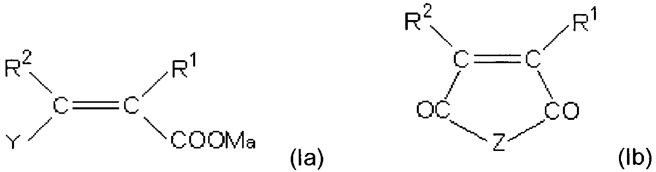

Bei dem Mono- oder Dicarbonsäure-Derivat (la) und dem in cyclischer Form vorliegenden Monomer (Ib), wobei Z = O (Säureanhydrid) oder NR² (Säureimid) darstellen, steht R¹ und R² unabhängig voneinander für Wasserstoff oder einen aliphatischen Kohlenwasserstoffrest mit 1 bis 20 C-Atomen, vorzugsweise eine Methylgruppe. Y bedeutet H, -COOMₐ, -CO-O(C_{q}H_{2q}O)ᵣ-R³, -CO-NH-(C_{q}H_{2q}O)ᵣ-R³.

M bedeutet Wasserstoff, ein ein- oder zweiwertiges Metallkation, vorzugsweise Natrium-, Kalium-, Calcium- oder Magnesium-Ion, weiterhin Ammonium oder ein organischer Aminrest sowie a = ½ oder 1, je nachdem, ob es sich bei M um ein ein- oder zweiwertiges Kation handelt. Als organische Aminreste werden vorzugsweise substituierte Ammonium-Gruppen eingesetzt, die sich ableiten von primären, sekundären oder tertiären C₁₋₂₀-Alkylaminen, C₁₋₂₀-Alkanolaminen, C₅₋₈-Cycloalkylaminen und C₆₋₁₄-Arylaminen. Beispiele für die entsprechenden Amine sind Methylamin, Dimethylamin, Trimethylamin, Ethanolamin, Diethanolamin, Triethanolamin, Methyldiethanolamin, Cyclohexylamin, Dicyclohexylamin, Phenylamin, Diphenylamin in der protonierten (Ammonium)Form.

R³ bedeutet Wasserstoff, ein aliphatischer Kohlenwasserstoffrest mit 1 bis 20 C-Atomen, ein cycloaliphatischer Kohlenwasserstoffrest mit 5 bis 8 C-Atomen, ein Arylrest mit 6 bis 14 C-Atomen, der ggf. noch substituiert sein kann, q = 2 , 3 oder 4 sowie r = 0 bis 200, vorzugsweise 1 bis 150. Die aliphatischen Kohlenwasserstoffe können hierbei linear oder verzweigt sowie gesättigt oder ungesättigt sein. Als bevorzugte Cycloalkylreste sind Cyclopentyl- oder Cyclohexylreste, als bevorzugte Arylreste Phenyl- oder Naphthylreste anzusehen, die insbesondere noch durch Hydroxyl-, Carboxyl- oder Sulfonsäuregruppen substituiert sein können.

Die folgende Formel stellt das Monomer (Ic) dar:

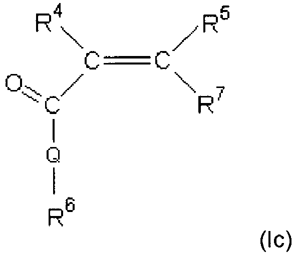

Hierbei steht R⁴ und R⁵ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen. Q kann gleich oder verschieden sein und wird durch NH, NR³ oder O repräsentiert, wobei R³ die oben genannte Bedeutung besitzt.

Weiterhin ist R⁶ gleich oder verschieden und wird durch (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und (CₙH₂ₙ)-NR⁸_{b} mit n = 0, 1, 2, 3 oder 4 und b = 2 oder 3 repräsentiert.

R⁷ bedeutet H, -COOMₐ, -CO-O(C_{q}H_{2q}O)ᵣ-R³, -CO-NH-(C_{q}H_{2q}O)ᵣ-R³, wobei Mₐ, R³, q und r die oben genannte Bedeutungen besitzen.

R⁸ steht für Wasserstoff, einen aliphatischen Kohlenwasserstoffrest mit 1 bis 10 C-Atomen, einen cycloaliphatischen Kohlenwasserstoffrest mit 5 bis 8 C-Atomen, ein ggf. substituierter Arylrest mit 6 bis 14 C-Atomen.

Weiterhin bevorzugt im Sinne der vorliegenden Erfindung wird das ethylenisch ungesättigte Monomer (II) durch folgende allgemeine Formeln repräsentiert: 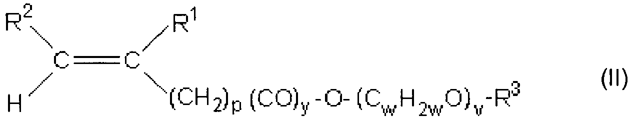 wobei p für eine ganze Zahl zwischen 0 und 6 steht, y für 0 oder 1, v für eine ganze Zahl zwischen 3 und 500 und w unabhängig voneinander für jede (C_{w}H_{2w}O)-Einheit gleich oder verschieden für eine ganze Zahl zwischen 2 und 18.
R¹, R² und R³ besitzen die oben genannte Bedeutung.

In einer bevorzugten Ausführungsform stehen in der allgemeine Formeln (II) p für eine ganze Zahl zwischen 0 und 4, v für eine ganze Zahl zwischen 5 und 500 und w unabhängig voneinander für jede (C_{w}H_{2w}O)-Einheit gleich oder verschieden für 2 oder 3. Es ist insbesondere bevorzugt, wenn zumindest ein Teilbereich durch ein statistisches Ethylenoxid/Propylenoxid-Copolymer gebildet wird und der molare Anteil an Propylenoxid-Einheiten bevorzugt 10 bis 30%, bezogen auf die Summe der Ethylenoxid- und Propylenoxid-Einheiten des statistischen Ethylenoxid/Propylenoxid-Copolymers beträgt.

Der molare Anteil der Monomere (I) und (II) in dem erfindungsgemäßen Copolymer kann in weiten Bereichen frei gewählt werden. Als besonders vorteilhaft hat es sich erwiesen, wenn der Anteil des Monomeren (I) an dem Copolymer 5 bis 95 Mol-%, bevorzugt 30 bis 95 Mol-% und insbesondere 55 bis 95 Mol-% beträgt. In einer weiterhin bevorzugten Ausführungsform beträgt der Anteil des Monomeren (II) an dem Copolymer 1 bis 89 Mol-%, insbesondere 1 bis 55 Mol-% und besonders bevorzugt 1 bis 30 Mol-%.

Es ist hierbei als bevorzugt anzusehen, dass das Monomer (II) ein Molekulargewicht von 500 bis 10000 g/mol aufweist.

In einer bevorzugten Ausführungsform besitzt das erfindungsgemäße Copolymer ein Molekulargewicht von 12000 bis 75000 g/mol.

Als organisches Lösungsmittel können bevorzugt alle organischen Lösungsmittel dienen, in welchen das erfindungsgemäße Copolymer eine gute Löslichkeit aufweist. Insbesondere bevorzugt sollte sich mindestens 1 Gew.-%, bevorzugt mindestens 25 Gew.-% und insbesondere mindestens 40 Gew.-% des Copolymers in dem organischen Lösungsmittel lösen, bezogen auf die Gesamtmasse von Lösungsmittel und Copolymer. Die Löslichkeit des Copolymers ist von den konkret gewählten Monomeren und den Mengenverhältnissen der eingesetzten Monomere abhängig und kann durch einfache Versuche ermittelt werden. Insbesondere handelt es sich um mindestens ein Lösungsmittel aus der Reihe Ethylacetat, n-Butylacetat, 1-Methoxy-2-propylacetat, Ethanol, i-Propanol, n-Butanol, 2-Ethylhexanol, 1-Methoxy-2-propanol, Ethylenglykol, Propylenglykol, Aceton, Butanon, Pentanon, Hexanon, Methylethylketon, Ethylacetat, Butylacetat, Amylacetat, Tetrahydrofuran, Diethylether, Toluol, Xylol oder höher siedende Alkylbenzole. Weiterhin kann es sich um Polyethylenglykolether oder Polypropylenglykolether oder statistische Ethylenoxid/Propylenoxid-Copolymere mit einer mittleren Molmasse zwischen 200 und 2000 g/mol, Mono-, Di- oder Triethylenglykol, Mono-, Di- oder Tripropylenglykol, Methy-, Ethyl- Propyl-, Butyl- oder höherwertige Alkylpolyalkylenglykolether mit 1, 2, 3 oder mehreren Ethylenglykol- und/oder Propylenglykoleinheiten, beispielsweise Methoxypropanol, Dipropylenglykolmonomethylether, Tripropylenglykolmonomethylether, Ethylenglykolmonobutylether, Diethylenglykolmonobutylether, Butylpolyethylenglykolether, Propylpolyethylenglykolether, Ethylpolyethylenglykolether, Methylpolyethylenglykolether, Dimethylpolyethylenglykolether, Dimethylpolypropylenglykolether, Glycerinethoxylate mit einem Molekulargewicht von 200 bis 20000 g/mol, Pentaerythritolalkoxylate, Ethylencarbonat, Propylencarbonat, Glycerincarbonat, Glycerinformal und 2,3-O-Isopropylidenglycerin. Insbesondere bevorzugt handelt es sich um Alkylpolyalkylenglykolether und besonders bevorzugt Methylpolyethylenglykolether sowie Polyethylenglykolether, Polypropylenglykolether und statistische Ethylenoxid/Propylenoxid-Copolymere mit einer mittleren Molmasse zwischen 200 und 2000 g/mol. Weiterhin bevorzugt sind Lösungsmittel auf Basis von Carbonaten, insbesondere Ethylencarbonat, Propylencarbonat und Glycerincarbonat.

Die erfindungsgemäße flüssige Komponente kann auch Wasser enthalten. Ein hoher Wassergehalt der flüssigen Komponente kann, in Abhängigkeit von den Inhaltsstoffen der pulverförmigen Zusammensetzung und insbesondere in Abhängigkeit von dem eingesetzten anorganischen Bindemittel, zu einer Verschlechterung der Lagerfähigkeit der erfindungsgemäßen pulverförmigen Zusammensetzung führen. Besonders bevorzugt beträgt der Wassergehalt deshalb < 10 Gew.-%, insbesondere < 1 Gew.-%. Insbesondere kann der Wassergehalt zwischen 30 und 0,01 Gew.-%, vorzugsweise zwischen 10 und 0,01 Gew.-% und besonders bevorzugt zwischen 1 und 0,1 Gew.-% der flüssigen Komponente betragen. So kann insbesondere der Einsatz von Wasserfängern vorteilhaft sein. Wasserfänger binden dabei Wasser entweder in ihre Kristrallstruktur ein oder verbrauchen das Wasser über andere Mechanismen, bevor das Bindemittel damit reagieren kann und einen negative Beeinträchtigung der Produkteigenschaft verursacht wird. Insbesondere kann es sich um Molekularsieb oder schnell wasserbindende Salze, wie beispielsweise CaO handeln. Wasserfänger können zu einer höheren Wassertoleranz der erfindungsgemäßen pulverförmigen Zusammensetzung führen, wobei in diesem Fall keine Verschlechterung der Lagerfähigkeit der erfindungsgemäßen pulverförmigen Zusammensetzung zu beobachten ist.

Hinsichtlich der Löslichkeit des erfindungsgemäßen Copolymers in der flüssigen Komponente hat es sich als besonders vorteilhaft erwiesen, wenn das Monomer (I) oder (II) ein statistisches Ethylenoxid/Propylenoxid-Copolymer mit einem Molekulargewicht von 160 bis 10000 g/mol umfasst, insbesondere von 500 bis 6000 g/mol, wobei der molare Anteil an Propylenoxid-Einheiten bevorzugt 10 bis 30%, bezogen auf die Summe der Ethylenoxid- und Propylenoxid-Einheiten beträgt. Insbesondere bevorzugt handelt es sich in diesem Fall bei dem organischen Lösungsmittel um Alkylpolyalkylenglykolether und besonders bevorzugt Methylpolyethylenglykolether sowie Polyethylenglykolether, Polypropylenglykolether und statistische Ethylenoxid/Propylenoxid-Copolymere mit einer mittleren Molmasse zwischen 200 und 2000 g/mol.

Um eine möglichst schnelle Suspendierbarkeit der erfindungsgemäßen pulverförmigen Zusammensetzung zu erreichen ist es vorteilhaft, wenn das mindestens eine erfindungsgemäße Copolymer in der flüssigen Komponente zu einem Anteil von mindestens 50 Gew.-%, bevorzugt mindestens 80 Gew.-% und besonders bevorzugt mindestens 99 Gew.-% in gelöster Form vorliegt. Insbesondere liegt das Copolymer in der flüssigen Komponente gelöst vor.

Das in Kontakt bringen des Pulvers, welches mindestens ein anorganisches Bindemittel aufweist, mit der flüssigen Komponente enthaltend das erfindungsgemäße Copolymer, kann auf jede dem Fachmann hierfür bekannte Art geschehen. Als besonders geeignet hat es sich erwiesen, wenn die flüssige Komponente durch Aufsprühen oder Bedüsen mit dem Pulver in Kontakt gebracht wird, wobei das Verfahren bevorzugt einen Mischschritt umfasst. Auf diese Weise kann der homogene Auftrag in einfacher Weise bei gleichzeitig guter Haftung und Anfangsadhäsion gewährleistet werden. Selbstverständlich kann das in Kontakt bringen des Pulvers mit der flüssigen Komponente auch auf jede andere geeignete Art und Weise erfolgen. In Frage kommen hier insbesondere auch das Abmischen bzw. Unterrühren, wobei jedoch der Sprühauftrag eindeutig zu bevorzugen ist, da dies die einfachste und wirtschaftlich attraktivste Auftragungsvariante darstellt.

In einer besonders bevorzugten Ausführungsform können der flüssigen Komponente, je nach Verwendungszweck, auch noch weitere Additive zugemischt werden, wobei diese bevorzugt in gelöster Form vorliegen. Insbesondere kann die flüssige Komponente bezogen auf die Gesamtmischung 0,5 bis 69 Gew.-% mindestens eines weiteren

In einer besonders bevorzugten Ausführungsform können der flüssigen Komponente, je nach Verwendungszweck, auch noch weitere Additive zugemischt werden, wobei diese bevorzugt in gelöster Form vorliegen. Insbesondere kann die flüssige Komponente bezogen auf die Gesamtmischung 0,5 bis 69 Gew.-% mindestens eines weiteren Additivs enthalten. Hierdurch kann die pulverförmige Zusammensetzung in einfacher Weise mit weiteren Additiven versetzt werden, was eine besonders wirtschaftliche Vorgehensweise darstellt und ggf. kann auch ein gesonderter Trocknungsschritt entfallen. Durch die besonders homogene Verteilung des weiteren Additivs kann dessen Effekt direkt nach dem Anmachen mit Wasser verbessert werden, was als weiterer Vorteil dieser Ausführungsform zu sehen ist.

In einer weiterhin bevorzugten Ausführungsform besteht die flüssige Komponente aus einer Lösung des erfindungsgemäßen Copolymers in einem organischen Lösungsmittel.

Die pulverförmige Zusammensetzung sollte im Rahmen der vorliegenden Erfindung vorzugsweise in trockener Form vorliegen, wobei hierunter zu verstehen ist, dass diese einen Wassergehalt nach Karl-Fischer von weniger als 5 Gew.-%, vorzugsweise weniger als 1 Gew.-% und besonders bevorzugt von weniger als 0,1 Gew.-% aufweist.

Es ist bevorzugt, wenn das Pulver, welches mindestens ein anorganisches Bindemittel umfasst, eine mittlere Teilchengröße zwischen 0,1 und 1000 µm, besonders bevorzugt zwischen 1 und 200 µm aufweist. Die Teilchengröße wird hierbei bevorzugt durch Laserdiffraktometrie bestimmt.

Insbesondere kann es sich bei dem erfindungsgemäßen anorganischen Bindemittel um mindestens eines aus der Reihe Zement auf Basis Portlandzement, Weißzement, Calciumaluminatzement, Calciumsulfoaluminatzement, Calciumsulfat-n-Hydrat oder latent hydraulisches bzw. puzzolanisches Bindemittel wie z. B. Flugasche, Metakaolin, Silicastaub und Hüttensand handeln. Besonders bevorzugt sind Zement auf Basis Portlandzement, Calciumsulfat Halbhydrat, Calciumsulfat Anhydrit und Calciumaluminatzement.

Bevorzugt enthält die erfindungsgemäße pulverförmige Zusammensetzung zwischen 2 und 99,9 Gew.-%, insbesondere zwischen 8 und 50 Gew.-% und besonders bevorzugt zwischen 10 und 40 Gew.-% des anorganischen Bindemittels.

Bei der erfindungsgemäßen pulverförmigen Zusammensetzung, welche mindestens ein anorganisches Bindemittel aufweist, handelt es sich bevorzugt um einen Trockenmörtel. Das ständige Streben nach weitgehender Rationalisierung sowie verbesserter Produktqualität hat dazu geführt, dass im Baubereich Mörtel für die verschiedensten Einsatzbereiche heute praktisch nicht mehr auf der Baustelle selbst aus den Ausgangsstoffen zusammengemischt wird. Diese Aufgabe wird heute weitgehend von der Baustoffindustrie werksseitig übernommen und die gebrauchsfertigen Mischungen als ten bauphysikalischen Aufgaben erfüllen. Je nach gestellter Aufgabe werden dem Bindemittel, welches bspw. Zement und/oder Kalk und/oder Calciumsulfat enthalten kann, weitere Additive bzw. Zusatzmittel beigemengt, um den Werktrockenmörtel an den speziellen Einsatzzweck anzupassen. Hierbei kann es sich bspw. um Schwundreduzierer, Expansionsmittel, Beschleuniger, Verzögerer, Dispergiermittel, Verdicker, Entschäumer, Luftporenbildner, Korrosionsinhibitoren handeln.

Bei dem erfindungsgemäßen Werktrockenmörtel kann es sich insbesondere um Mauermörtel, Putzmörtel, Mörtel für Wärmedämmverbundsysteme, Sanierputze, Fugenmörtel, Fliesenkleber, Dünnbettmörtel, Estrichmörtel, Vergussmörtel, Einpressmörtel, Spachtelmassen, Dichtschlämmen oder Auskleidungsmörtel (z. B. für Trinkwasserrohre) handeln.

Im Sinne der vorliegenden Erfindung wird unter dem Begriff Werktrockenmörtel auch anorganisches Bindemittel ohne Zuschläge verstanden, insbesondere Portlandzement und/oder Calciumaluminatzement und/oder Calciumsulfat. In diesem Fall kann die hieraus hergestellte erfindungsgemäße pulverförmige Zusammensetzung auch nachfolgend mit Füllstoffen und Additiven gemischt werden um hierdurch beispielsweise Mauermörtel, Putzmörtel, Fugenmörtel, Fliesenkleber, Dünnbettmörtel, Estrichmörtel, Vergussmörtel, Einpressmörtel, Spachtelmassen auf Basis Zement bzw. Calciumsulfat oder Auskleidungsmörtel (z. B. für Trinkwasserrohre) zu erhalten. Eine besonders schnelle homogene Dispergierbarkeit der so hergestellten Werktrockenmörtel mit Wasser wird auch durch dieses Vorgehen erreicht.

In einer besonderen Ausführungsform kann es sich bei dem erfindungsgemäßen Werktrockenmörtel auch um eine selbstnivellierende Verlaufsmasse handeln. Dies ist besonders vorteilhaft, da solche pulverförmigen Zusammensetzungen für geringe Schichtdicken in der Regel sehr fein sind und sich daher vergleichsweise langsam mit Wasser anmischen lassen.

Ebenso eingeschlossen sind Werkmörtel, welche bei der Herstellung auf der Baustelle außer mit Wasser auch noch mit weiteren Komponenten, insbesondere flüssigen und/oder pulverförmigen Additiven und/oder mit Gesteinskörnung versehen werden können (Zweikomponenten Systeme).

Bei dem anorganischen Bindemittel kann es sich weiterhin um Gips handeln. Der Ausdruck "Gips" wird im vorliegenden Zusammenhang synonym mit Calciumsulfat verwendet, wobei das Calciumsulfat in seinen unterschiedlichen wasserfreien und hydratisierten Formen mit und ohne Kristallwasser vorliegen kann. Natürlicher Gips umfasst im Wesentlichen Calciumsulfat-Dihydrat ("Dihydrat"). Die natürliche kristallwasserfreie Form von Calciumsulfat ist vom Ausdruck "Anhydrit" umfasst. Neben den natürlichen Erscheinungsformen stellt Calciumsulfat ein typisches Nebenprodukt technischer Prozesse dar, worunter dann "synthetischer Gips" verstanden wird. Ein typisches Beispiel für einen synthetischen Gips aus technischen Prozessen ist die Abgasentschwefelung. Synthetischer Gips kann aber auch gleichermaßen das Nebenprodukt von Phosphorsäure- oder Flusssäure-Herstellungsverfahren entstehen, wobei in diesen Fällen Halbhydratformen wie z. B. CaSO₄ x 1/2 H₂O ("Halbhydrat")gebildet wird. Typischer Gips (CaSO₄ x 2 H₂O) kann calziniert werden, indem das Kristallwasser abgetrennt wird. Produkte der unterschiedlichsten Calzinierungsverfahren sind α- oder β-Halbhydrat. β-Halbhydrat resultiert aus einer raschen Erhitzung in offenen Gefäßen, bei einer gleichzeitig schnellen Verdampfung von Wasser unter Bildung von Hohlräumen. α-Halbhydrat wird hergestellt durch die Entwässerung von Gips in geschlossen Autoklaven. Die Kristallform in diesem Fall ist relativ dicht, weshalb dieses Bindemittel weniger Wasser zur Verflüssigung benötigt als β-Halbhydrat. Auf der anderen Seite rehydriert Halbhydrat mit Wasser zu Dihydrat-Kristallen. Üblicherweise ist für die vollständige Hydratation von Gips ein Zeitbedarf von einigen Minuten bis Stunden notwendig, woraus eine verkürzte Verarbeitungszeit im Vergleich zu Zementen resultiert, die zur vollständigen Hydratation mehrere Stunden bis Tage benötigen. Diese Eigenschaften machen Gips zu einer brauchbaren Alternative zu Zementen als Bindemittel in den verschiedensten Anwendungsgebieten. Außerdem zeigen ausgehärtete Gipsprodukte eine ausgeprägte Härte und Druckfestigkeit.

Für die unterschiedlichsten Anwendungsgebiete wird β-Halbhydrat ausgewählt, weil dieser besser verfügbar ist, und unter wirtschaftlichen Gesichtspunkten zahlreiche Vorteile zeigt. Allerdings werden diese Vorteile dadurch zum Teil wieder aufgehoben, dass β-Halbhydrat bei der Verarbeitung einen höheren Wasserbedarf hat, um überhaupt fließfähige Slurrys zu erzielen. Zudem neigen die hieraus hergestellten getrockneten Gipsprodukte zu einer gewissen Schwäche, welche auf Restwassermengen zurückzuführen sind, die in der Kristallmatrix beim Aushärten verblieben sind. Aus diesem Grund zeigen entsprechende Produkte eine geringere Härte als Gipsprodukte, die mit geringeren Mengen an Anmachwasser zubereitet worden sind.

Besonders bevorzugt handelt es sich deshalb im Sinne der vorliegenden Erfindung bei Gips um β-Calciumsulfathalbhydrat. Erfindungsgemäßes β-Calciumsulfathalbhydrat ist hierbei insbesondere zur Verwendung in gipsbasierten Fließestrich geeignet.

Eine Formulierung von gipsbasierten Fließestrichen ist bislang nur mit Bindemitteln auf Basis von Anhydrit oder α-Halbhydrat möglich. Bei dieser Art von Bindemitteln handelt es sich um Modifikationen des Gipses, die einen sehr niedrigen Wasseranspruch aufweisen und damit hochfeste Binder sind. Allerdings weisen beide Komponenten sowohl preislich als auch in ihrer Verfügbarkeit deutliche Nachteile gegenüber β-Halbhydrat auf. Die Verwendung von β-Halbhydrat dagegen ist nach dem Stand der Technik nicht möglich, da aufgrund des hohen Wasseranspruchs die daraus resultierenden Festigkeiten zu gering sind, um einen Fließestrich in ausreichender Qualität zu produzieren.

Es hat sich gezeigt, dass Fließmittel auf Basis von Ligninsulfonat, Melaminsulfonat und Polynaphthalinsulfonat nicht in der Lage sind den Wasseranspruch von β-Halbhydrat ausreichend zu reduzieren.

Der Einsatz von Polycarboxylatethern ermöglicht eine ausreichende Wasserreduktion, allerdings ist die Entfaltungsgeschwindigkeit von Polycarboxylatethern, die dem Stand der Technik entsprechen, zu gering für maschinenapplizierte Fließestriche.

Bei der Verarbeitung einer derartigen Estrichmischung mit einer Maschine kommt es zu Beginn zu einem starken Viskositätsaufbau, so dass die Mischung entweder nicht homogen zu verarbeiten ist oder aber der Verarbeiter auf der Baustelle die Viskosität mit der Zugabe von Wasser ausgleicht, wodurch es zu Separation der Masse kommt. Darüber hinaus führt das überschüssige, später verdunstende Wasser zu einer signifikant verschlechterten mechanischen Festigkeit, Beständigkeit und Dauerhaftigkeit. Maschinenapplizierte gipsbasierte Fließestriche auf Basis von erfindungsgemäßem β-Calciumsulfathalbhydrat lassen sich hingegen wie die im Stand der Technik bekannten gipsbasierten Fließestriche auf Basis von Anhydrit oder α-Halbhydrat verarbeiten und weisen eine vergleichbare oder sogar bessere mechanische Festigkeit, Beständigkeit und Dauerhaftigkeit auf.

Bei der erfindungsgemäßen pulverförmigen Zusammensetzung, welche mindestens ein anorganisches Bindemittel aufweist, kann es sich insbesondere auch um einen Bindemittelcompound handeln. Darunter werden im vorliegenden Zusammenhang Gemische aus mindestens zwei Bindemitteln aus der Reihe Zement, puzzolanisches und/oder latent hydraulisches Bindemittel, Weißzement, Spezialzement, Calciumaluminatzement, Calciumsulfoaluminatzement und die verschiedenen wasserhaltigen und wasserfreien Calciumsulfate verstanden. Diese können dann ggf. noch weitere Additive enthalten.

Ein weiterer Gegenstand der vorliegenden Erfindung ist ein Verfahren zur Herstellung einer flüssigen Komponente, umfassend mindestens 30 Gew.-% eines organischen Lösungsmittels, maximal 30 Gew.-% Wasser, insbesondere weniger als 5 Gew.-% und besonders bevorzugt weniger als 1 Gew.-% Wasser, sowie ein Copolymer, erhalten durch Polymerisation einer Mischung von Monomeren, umfassend
(I) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst
   und
(II) mindestens ein ethylenisch ungesättigtes Monomer mit einem Polyalkylenether-Rest,
wobei die Polymerisation der Monomeren in einem wasserhaltigen Lösungsmittel durchgeführt wird, wobei der Wassergehalt der gesamten Reaktionsmischung mehr als 10 Gew.-%, insbesondere mehr als 20 Gew.-% und besonders bevorzugt mehr als 40 Gew.-% beträgt, das Polymerisationsprodukt mit einem organischen Lösungsmittel versetzt und Wasser entfernt wird.

Die Entfernung des Wassers kann mit allen dem Fachmann hierfür bekannten Verfahren durchgeführt werden. Insbesondere haben sich Dünnschichtverdampfer als besonders geeignet erwiesen.

Insbesondere bevorzugt handelt es sich bei dem Monomer (I) um die bereits oben angeführten Verbindungen der Formel (Ia), (Ib) und (Ic) und bei dem Monomer (II) um die bereits oben angeführte Verbindung der Formel (II).

Als Lösungsmittel bei der Herstellung der erfindungsgemäßen Copolymere ist insbesondere Wasser geeignet. Es besteht aber auch die Möglichkeit ein Gemisch aus Wasser und einem organischen Lösungsmittel einzusetzen, wobei sich das Lösungsmittel bezüglich radikalischer Polymerisationsreaktionen weitestgehend inert verhalten sollte. Hinsichtlich der organischen Lösungsmittel sind insbesondere die bereits oben genannten organischen Lösungsmittel als besonders geeignet zu betrachten.

Die Polymerisationsreaktion erfolgt bevorzugt im Temperaturbereich zwischen 0 und 180 °C, besonders bevorzugt zwischen 10 und 100 °C, sowohl bei Normaldruck als auch unter erhöhtem oder erniedrigtem Druck. Gegebenenfalls kann die Polymerisation auch unter einer Schutzgasatmosphäre, vorzugsweise unter Stickstoff, ausgeführt werden.

Zur Auslösung der Polymerisation können energiereiche, elektromagnetische Strahlen, mechanische Energie oder chemische Polymerisationsinitiatoren wie organische Peroxide, z. B. Benzoylperoxid, tert.-Butylhydroperoxid, Methylethylketonperoxid, Cumoylperoxid, Dilauroylperoxid oder Azoinitiatoren, wie z. B. Azodiisobutyronitril, Azobisamidopropyl-hydrochlorid und 2,2'-Azobis(2-methylbutyronitril) verwendet werden. Ebenfalls geeignet sind anorganische Peroxyverbindungen, wie z. B. Ammoniumperoxodisulfat, Kaliumperoxodisulfat oder Wasserstoffperoxid, gegebenenfalls in Kombination mit Reduktionsmitteln (z. B. Natriumhydrogensulfit, Ascorbinsäure, Eisen(II)sulfat) oder Redoxsystemen, welche als reduzierende Komponente eine aliphatische oder aromatische Sulfonsäure (z. B. Benzolsulfonsäure, Toluolsulfonsäure) enthalten.

Als Molekulargewichtsregler kommen die üblichen Verbindungen zum Einsatz. Geeignete bekannte Regler sind z. B. Alkohole, wie Methanol, Ethanol, Propanol, Isopropanol, n-Butanol, sec.-Butanol und Amylalkohole, Aldehyde, Ketone, Alkylthiole, wie z. B. Dodecylthiol und tert.-Dodecylthiol, Thioglykolsäure, Isooctylthioglykolat, 2-Mercaptoethanol, 2-Mercaptopropionsäure, 3-Mercaptopropionsäure und einige Halogenverbindungen, wie z. B. Tetrachlorkohlenstoff, Chloroform und Methylenchlorid.

In einer alternativen weiteren Ausführungsform kann das Verfahren zur Herstellung der erfindungsgemäßen Copolymere auch in einem organischen Lösungsmittel oder in einem Gemisch mehrerer organischer Lösungsmittel durchgeführt werden. Insbesondere sind hierzu wiederum die bereits weiter oben genannten organischen Lösungsmittel als besonders geeignet zu betrachten.

Ein weiterer Gegenstand der vorliegenden Erfindung ist die Verwendung einer flüssigen Komponente, umfassend mindestens 30 Gew.-% eines organischen Lösungsmittels und mindestens 1 Gew.-% eines Copolymers, welches erhältlich ist durch Polymerisation einer Mischung von Monomeren, umfassend
(I) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst
   und
(II) mindestens ein ethylenisch ungesättigtes Monomer mit
   einem Polyalkylenether-Rest,
zur Behandlung eines Pulvers, welches mindestens ein anorganisches Bindemittel umfasst, zur Beschleunigung der homogenen Dispergierung des Pulvers mit Wasser, wobei 0,01 bis 10 Gew.-% der flüssigen Komponente, bezogen auf die Gesamtmasse, eingesetzt werden.

Insbesondere bevorzugt handelt es sich bei dem Monomer (I) wiederum um die bereits oben angeführten Verbindungen der Formel (Ia), (Ib) und (Ic) und bei dem Monomer (II) um die bereits oben angeführte Verbindung der Formel (II).

Die nachfolgenden Beispiele sollen die Erfindung näher erläutern.

### Beispiele:

### Beispiel 1

### Herstellung des Polycarboxylatethers

In einem 1000 ml Vierhalskolben mit Thermometer, pH-Meter und Rückflusskühler werden 385 g Wasser, 350 g (0,12 mol) Polyethylenglycol-41-3000-hydroxybutylmonovinylether (20 % PO statistisch) vorgelegt.

Diese Mischung wird auf 15 °C abgekühlt. Danach gibt man 0,5 g 2%ige Fe-SO₄*18H₂O-Lösung und 42,4 g (0,59 mol) Acrylsäure 99%-ig zu. Danach fügt man 1,8 g Mercaptoethanol und 5 g Brüggolit FF6 zu. Darauf stellt sich ein pH-Wert von ca. 4,6 ein. Nach einer Mischzeit von 2 Minuten werden 2,5 g 50%ige H₂O₂-Lösung zugegeben. Nach kurzer Zeit beginnt die Polymerisation und ein stetiger Temperaturanstieg stellt sich ein. Nach ca. 2 Minuten erreicht die Reaktion das Temperaturmaximum bei etwa 42 °C und einen pH-Wert von 4,2. Nach weiteren 5 Minuten wird der Ansatz mit 30 g 20%iger NaOH-Lösung auf pH = 5,5 gestellt. Man erhält eine leicht gelblich gefärbte, klare wässerige Polymerlösung mit einem Feststoffgehalt von 51 Gew.-%.

### Beispiel 2

### Herstellung der Polycarboxylatether-Lösung in Methylpolyethylenglykol 500

In einen 2000 ml Rundkolben werden 588 g der 51%igen wässrigen Polycarboxylatether-Lösung aus Beispiel 1 eingewogen. Es werden 700 g Methylpolyethylenglykol 500 (Pluriol^{®} A 500 E der BASF SE) zugegeben. Mittels eines Rotationsverdampfers wird dann bei 70 °C und 40 mbar das Wasser abgezogen. Bei einem Wassergehalt von unter 1 Gew.-% wird abgebrochen und abgekühlt. Die entstandene Lösung ist leicht opalisierend und hat einen Wirkstoffgehalt von 30 Gew.-%.

### Beispiel 3

### Herstellung der Polycarboxylatether-Lösung in Propylencarbonat

In einen 2000 ml Rundkolben werden 980 g der 51%igen wässrigen Polycarboxylatether-Lösung aus Beispiel 1 eingewogen. Darauf werden 500 g Propylencarbonat gegeben. Mittels eines Rotationsverdampfers wird dann bei 70 °C und 40 mbar das Wasser abgezogen. Bei einem Wassergehalt von unter 1 Gew.-% wird abgebrochen und abgekühlt. Die entstandene Lösung ist leicht opalisierend und hat einen Wirkstoffgehalt von 50 Gew.-%.

### Beispiel 4

### Herstellung der Polycarboxylatether-Lösung in Methylpolyethylenglykol 500 / Glycerincarbonat

In einen 2000 ml Rundkolben werden 980 g der 51%igen wässrigen Polycarboxylatether-Lösung aus Beispiel 1 eingewogen. Darauf werden 500 g Methylpolyethylenglykol 500 (Pluriol^{®} A 500 E der BASF SE) / Glycerincarbonat Mischung (7:3) gegeben. Mittels eines Dünnschichtverdampfers wird anschließend bei 75°C und 100 mbar das Wasser abgezogen. Bei einem Wassergehalt von unter 2 Gew.-% wird abgebrochen und abgekühlt. Die entstandene Lösung ist leicht opalisierend und hat einen Wirkstoffgehalt von 50 Gew.-%.

### Anwendungsbeispiel 1

### Selbstverlaufende Spachtelmasse

### Pulverförmige Zusammensetzung:

| Einsatzstoff | Hersteller | Funktion | Gew.-% |
|---|---|---|---|
| Omyacarb 6AL | Omya GmbH | Füllstoff | 10,00 |
| Omyacarb 20 BG | Omya GmbH | Füllstoff | 15,00 |
| Omyacarb 130 AL | Omya GmbH | Füllstoff | 26,48 |
| Milke Classic | Heidelberg Cement AG | anorganisches Bindemittel | 30,00 |
| Ciment Fondu | Kerneos Inc. | anorganisches Bindemittel | 10,00 |
| CAB 30 | Lanxess AG | anorganisches Bindemittel | 6,00 |
| Starvis 3003 F | BASF Construction Polymers GmbH | Sedimentationsverringerer | 0,15 |
| Vinnapas 5023L | Wacker | organisches Bindemittel | 2,00 |
| Weinsäure | UD Chemie GmbH | Verzögerer | 0,12 |
| Lithium carbonate | Chemmetall GmbH | Beschleuniger | 0,10 |
| Vinapor DF 9010 F | BASF Construction Polymers GmbH | Entschäumer | 0,15 |
| | | | 100,00 |

300 g der pulverförmigen Zusammensetzung wird mit 2,0 g (0,67 Gew.-% bezogen auf das Trockenmörtelgewicht) einer Lösung aus Beispiel 2 beaufschlagt (entspricht 0,20 Gew.-% Dispergiermittel und 0,47 Gew.-% Lösungsmittel). Zur Begutachtung der Anmischbarkeit werden 300 g der beaufschlagten pulverförmigen Zusammensetzung in einen Becher gegeben und mit einem Axialrührer bei 500 Umdrehungen pro Minute gerührt. Dann erfolgt die Zugabe der Flüssigkeit (63 g Wasser entspricht 21 Gew.-% bezogen auf das Trockenmörtelgewicht) und es wird die Zeit gemessen, nach der visuell eine homogene Konsistenz des Frischmörtels resultiert. Diese Testmischung benötigt 9 Sekunden, bis eine homogene Konsistenz erreicht wird.

Zum Vergleich dient eine identische pulverförmige Zusammensetzung, bei der das identische Dispergiermittel (0,6 g entspricht 0,20 Gew.-% bezogen auf das Trockenmörtelgewicht) pulverförmig zugegeben wird. Diese homogenisierte Mischung wird ebenfalls mit einem Axialrührer bei 500 Umdrehungen pro Minute gerührt. Dann erfolgt die Zugabe der Flüssigkeit. Als Flüssigkeit dienen 63 g Wasser sowie 1,4 g Methylpolyethylenglykol 500 (Pluriol^{®} A 500 E der BASF SE). In dieser Mischung sind nun - wie im erfindungsgemäßen Anwendungsbeispiel - neben der Pulvermischung zusätzlich 0,6 g Fließmittel und 1,4 g Lösungsmittel enthalten. Nach der Zugabe der Flüssigkeit benötigt der Mörtel 18 Sekunden, bis eine homogene Konsistenz erreicht wird.

### Anwendungsbeispiel 2:

### Feuerfestmörtel

### Pulverförmige Zusammensetzung

| Einsatzstoff | Hersteller | Funktion | Gew.-% |
|---|---|---|---|
| Omyacarb 6AL | Omya GmbH | Füllstoff | 10 |
| Omyacarb 20 BG | Omya GmbH | Füllstoff | 15 |
| Omyacarb 130 AL | Omya GmbH | Füllstoff | 27 |
| CA 270 | Almatis GmbH | anorganisches Bindemittel | 11 |
| CTC 50 | Almatis GmbH | Füllstoff | 37 |
| | | | 100 |

300 g der pulverförmigen Zusammensetzung wird mit 2,0 g (0,67 % bezogen auf das Trockenmörtelgewicht) einer Lösung aus Beispiel 2 beaufschlagt (entspricht 0,20 % Dispergiermittel und 0,47 % Lösungsmittel). Zur Begutachtung der Anmischbarkeit werden 300 g der beaufschlagten pulverförmigen Zusammensetzung in einen Becher gegeben und mit einem Axialrührer bei 500 Umdrehungen pro Minute gerührt. Dann erfolgt die Zugabe der Flüssigkeit (66 g Wasser entspricht 22 % bezogen auf das Trockenmörtelgewicht) und es wird die Zeit gemessen, nach der visuell eine homogene Konsistenz des Frischmörtels resultiert. Diese Testmischung benötigt 5 Sekunden, bis eine homogene Konsistenz erreicht wird.

Zum Vergleich dient eine identische pulverförmige Zusammensetzung, bei der das identische Dispergiermittel (0,6 g entspricht 0,20 % bezogen auf das Trockenmörtelgewicht) pulverförmig zugegeben wird. Diese homogenisierte Mischung wird ebenfalls mit einem Axialrührer bei 500 Umdrehungen pro Minute gerührt. Dann erfolgt die Zugabe der Flüssigkeit. Als Flüssigkeit dienen 66 g Wasser sowie 1,4 g Methylpolyethylenglykol 500 (Pluriol^{®} A 500 E der BASF SE). In dieser Mischung sind nun - wie im erfindungsgemäßen Anwendungsbeispiel - neben der Pulvermischung zusätzlich 0,6 g Fließmittel und 1,4 g Lösungsmittel enthalten. Nach der Zugabe der Flüssigkeit benötigt der Mörtel 9 Sekunden, bis eine homogene Konsistenz erreicht wird.

### Anwendungsbeispiel 3:

32,92 kg Stuckgips (β-Calciumsulfathalbhydrat) werden mit 987,57 g einer Lösung eines Polycarboxylatethers in Methylpolyethylenglykol 500 (Wirkstoffgehalt 10 Gew.-%), welche in Analogie zu Beispiel 2 hergestellt wurde, in einem Lödige Mischer besprüht. Die Dosierung der Polycarboxylatether-Lösung erfolgt mit Hilfe einer Airless-Pumpe der Firma Graco. Der Eingangsdruck beträgt ca. 1,5 bar und die Dosierrate ca. 320 ml/min. Die Dosierung beginnt bei einer Anfangstemperatur von 27°C und endet bei einer Temperatur von 39°C. Während des Dosiervorgangs wird der Lödige Mischer mit einer Rotationsrate von 188 U/min betrieben und der Messerkopf auf Stufe 2 eingestellt. Die gesprühte Menge an Polycarboxylatether-Lösung wird mittels eines Durchflussmessers bestimmt. Zur Beobachtung des Mischvorganges wird der Frontdeckel durch einen Deckel aus Plexiglas ersetzt. Nach der Dosierung wird noch weitere 10 Minuten bis zum Erhalt einer homogenen Mischung gerührt.

Zur Beurteilung der Anmischbarkeit werden zunächst 103 g des beaufschlagten Stuckgipses mit 100 g Kalksteinmehl (Omyacarb 6AL) homogenisiert und in einem Becher gegeben. Während ein Axialrührer bei 200 Umdrehungen pro Minute die pulverförmigen Bestandteile mischt, erfolgt die Zugabe des Anmachwassers (58 g). Anschließend wird die Zeit gemessen, nach der visuell eine homogene Konsistenz des Frischmörtels resultiert. Diese erfindungsgemäße Mischung benötigt dafür circa 4 Sekunden.

### Vergleichsbeispiel

Zum Vergleich dient eine identische Zusammensetzung aus 100 g Stuckgips (β-Calciumsulfathalbhydrat) und 100 g Kalksteinmehl (Omyacarb 6AL), bei der das identische Dispergiermittel (0,3 g) pulverförmig zugegeben wird. Während ein Axialrührer bei 200 Umdrehungen pro Minute die pulverförmigen Bestandteile mischt, erfolgt die Zugabe der Flüssigkomponente, bestehend aus Anmachwasser (58 g) und Lösungsmittel (2,7 g Methylpolyethylenglykol 500). Entsprechend liegen in der Mischung - wie im ersten Beispiel - neben dem Stuckgips und dem Kalksteinmehl 0,3 g Fließmittel und 2,7g Lösungsmittel vor. Diese Referenzmischung benötigt circa 7 Sekunden bis zur homogenen Konsistenz.

## Patentansprüche

1. Pulverförmige Zusammensetzung, herstellbar durch in Kontakt bringen eines Pulvers, welches mindestens ein anorganisches Bindemittel umfasst, mit 0,01 bis 10 Gew.-%, bezogen auf die Gesamtmasse der Zusammensetzung, einer flüssigen Komponente, umfassend mindestens ein Copolymer, welches erhältlich ist durch Polymerisation einer Mischung von Monomeren, umfassend
(I) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst
und
(II) mindestens ein ethylenisch ungesättigtes Monomer mit einem Polyalkylenoxid-Rest,
wobei die flüssige Komponente mindestens 1 Gew.-% des mindestens einen Copolymers und mindestens 30 Gew.-% eines organischen Lösungsmittels enthält.

2. Pulverförmige Zusammensetzung nach Anspruch 1, **dadurch gekennzeichnet, dass** es sich bei dem anorganischen Bindemittel um mindestens eines aus der Reihe Zement auf Basis Portlandzement, Weißzement, Calciumaluminatzement, Calciumsulfoaluminatzement, Calciumsulfat-n-Hydrat und latent hydraulisches bzw. puzzolanisches Bindemittel handelt.

3. Pulverförmige Zusammensetzung nach Anspruch 1 oder 2, **dadurch gekennzeichnet, dass** das ethylenisch ungesättigte Monomer (I) durch mindestens eine der folgenden allgemeinen Formeln aus der Gruppe (Ia), (Ib) und (Ic)repräsentiert wird 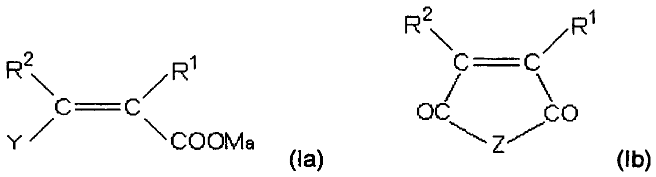 wobei
R¹ und R² unabhängig voneinander für Wasserstoff oder einen aliphatischen Kohlenwasserstoffrest mit 1 bis 20 C-Atomen
Y für H, -COOMₐ, -CO-O(C_{q}H_{2q}O)ᵣ-R³, -CO-NH-(C_{q}H_{2q}O)ᵣ-R³
M für Wasserstoff, ein ein- oder zweiwertiges Metallkation, Ammoniumion oder einen organischen Aminrest
a für ½ oder 1
R³ für Wasserstoff, einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen
q unabhängig voneinander für jede (C_{q}H_{2q}O)-Einheit gleich oder verschieden 2, 3 oder 4 und
r für 0 bis 200
Z für O, NR³
stehen, 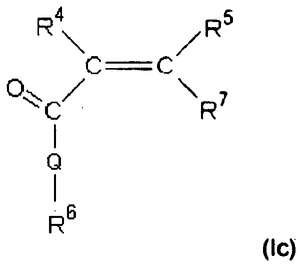 mit
R⁴ und R⁵ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen
Q gleich oder verschieden sowie repräsentiert durch NH, NR³ oder O; wobei R³ die oben genannte Bedeutung besitzt
R⁶ gleich oder verschieden sowie repräsentiert durch (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und (CₙH₂ₙ)-NR⁸_{b} mit n = 0, 1, 2, 3 oder 4 und b = 2 oder 3
R⁷ für H, -COOMₐ, -CO-O(C_{q}H₂qO)ᵣ-R³, -CO-NH-(C_{q}H_{2q}O)ᵣ-R³, wobei Mₐ, R³, q und r oben genannte Bedeutungen besitzen
R⁸ für Wasserstoff, einen aliphatischen Kohlenwasserstoffrest mit 1 bis 10 C-Atomen, einen cycloaliphatischen Kohlenwasserstoffrest mit 5 bis 8 C-Atomen, ein ggf. substituierter Arylrest mit 6 bis 14 C-Atomen.

4. Pulverförmige Zusammensetzung nach einem der Ansprüche 1 bis 3, **dadurch gekennzeichnet, dass** das ethylenisch ungesättigte Monomer (II) durch folgende allgemeine Formeln repräsentiert wird 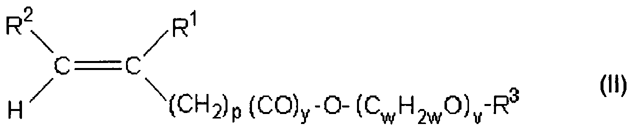 worin
p für eine ganze Zahl zwischen 0 und 6
y für 0 oder 1
v für eine ganze Zahl zwischen 3 und 500
w unabhängig voneinander für jede (C_{w}H_{2w}O)-Einheit gleich oder verschieden für eine ganze Zahl zwischen 2 und 18,
wobei R¹, R² und R³ die oben genannte Bedeutung besitzen stehen.

5. Pulverförmige Zusammensetzung nach Anspruch 4, **dadurch gekennzeichnet, dass** in der allgemeinen Formeln (II)
p für eine ganze Zahl zwischen 0 und 4
x für eine ganze Zahl zwischen 5 und 500
w unabhängig voneinander für jede (C_{w}H_{2w}O)-Einheit gleich oder verschieden für 2 oder 3,
stehen.

6. Pulverförmige Zusammensetzung nach einem der Ansprüche 1 bis 5, **dadurch gekennzeichnet, dass** der Anteil des Monomeren (I) an dem Copolymer 5 bis 95 Mol-% beträgt.

7. Pulverförmige Zusammensetzung nach einem der Ansprüche 1 bis 6, **dadurch gekennzeichnet, dass** der Anteil des Monomeren (II) an dem Copolymer 1 bis 89 Mol-% beträgt.

8. Pulverförmige Zusammensetzung nach einem der Ansprüche 1 bis 7, **dadurch gekennzeichnet, dass** es sich bei dem organischen Lösungsmittel um mindestens eines aus der Reihe Ethylacetat, n-Butylacetat, 1-Methoxy-2-propylacetat, Ethanol, i-Propanol, n-Butanol, 2-Ethylhexanol, 1-Methoxy-2-propanol, Ethylenglykol, Propylenglykol, Aceton, Butanon, Pentanon, Hexanon, Methylethylketon, Ethylacetat, Butylacetat, Amylacetat, Tetrahydrofuran, Diethylether, Toluol, Xylol oder höher siedende Alkylbenzole, Polyethylenglykolether oder Polypropylenglykolether oder statistische Ethylenoxid/Propylenoxid-Copolymere mit einer mittleren Molmasse zwischen 200 und 2000 g/mol, Mono-, Di- oder Triethylenglykol, Mono-, Di- oder Tripropylenglykol, Methy-, Ethyl- Propyl-, Butyl- oder höherwertige Alkylpolyalkylenglykolether mit 1, 2, 3 oder mehreren Ethylenglykol- und/oder Propylenglykoleinheiten, Glycerinethoxylate mit einem Molekulargewicht von 200 bis 20000 g/mol, Pentaerythritolalkoxylate, Ethylencarbonat, Propylencarbonat, Glycerincarbonat, Glycerinformal und 2,3-O-Isopropylidenglycerin handelt.

9. Pulverförmige Zusammensetzung nach einem der Ansprüche 1 bis 8, **dadurch gekennzeichnet, dass** das mindestens eine erfindungsgemäße Copolymer in der flüssigen Komponente zu einem Anteil von mindestens 50 Gew.-% in gelöster Form vorliegt.

10. Pulverförmige Zusammensetzung nach einem der Ansprüche 1 bis 9, **dadurch gekennzeichnet, dass** diese zwischen 5 und 99,5 Gew.-% des anorganischen Bindemittels enthält.

11. Pulverförmige Zusammensetzung nach einem der Ansprüche 1 bis 10, **dadurch gekennzeichnet, dass** das Monomer (I) oder (II)
ein statistisches Ethylenoxid/Propylenoxid-Copolymer mit einem Molekulargewicht von 160 bis 10000 g/mol umfasst.

12. Pulverförmige Zusammensetzung nach einem der Ansprüche 1 bis 11, **dadurch gekennzeichnet, dass** es sich um einen Werktrockenmörtel handelt, insbesondere um Mauermörtel, Putzmörtel, Mörtel für Wärmedämmverbundsysteme, Sanierputze, Fugenmörtel, Fliesenkleber, Dünnbettmörtel, Estrichmörtel, Vergussmörtel, Einpressmörtel, Spachtelmassen, Dichtschlämmen oder Auskleidungsmörtel.

13. Verfahren zur Herstellung einer flüssigen Komponente, umfassend mindestens 30 Gew.-% eines organischen Lösungsmittels, maximal 30 Gew.-% Wasser sowie ein Copolymer, erhalten durch Polymerisation einer Mischung von Monomeren, umfassend
(I) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst
und
(II) mindestens ein ethylenisch ungesättigtes Monomer mit einem Polyalkylenether-Rest,
**dadurch gekennzeichnet, dass** die Polymerisation der Monomeren in einem wasserhaltigen Lösungsmittel durchgeführt wird, wobei der Wassergehalt der gesamten Reaktionsmischung mehr als 10 Gew.-% beträgt, das Polymerisationsprodukt mit einem organischen Lösungsmittel versetzt und Wasser entfernt wird.

14. Verwendung einer flüssigen Komponente, umfassend mindestens 30 Gew.-% eines organischen Lösungsmittels und mindestens 1 Gew.-% eines Copolymers, welches erhältlich ist durch Polymerisation einer Mischung von Monomeren, umfassend
(I) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst
und
(II) mindestens ein ethylenisch ungesättigtes Monomer mit einem Polyalkylenether-Rest,
zur Behandlung eines Pulvers, welches mindestens ein anorganisches Bindemittel umfasst, zur Beschleunigung der homogenen Dispergierung des Pulvers mit Wasser, wobei 0,01 bis 10 Gew.-% der flüssigen Komponente, bezogen auf die Gesamtmasse, eingesetzt werden.

## Claims

1. Pulverulent composition which can be produced by bringing a powder which comprises at least one inorganic binder into contact with
from 0.01 to 10% by weight, based on the total mass of the composition, of a liquid component comprising at least one copolymer which can be obtained by polymerization of a mixture of monomers comprising
(I) at least one ethylenically unsaturated monomer which comprises at least one radical selected from the group consisting of carboxylic acid, carboxylic acid salt, carboxylic esters, carboxamide, carboxylic anhydride and carboximide and
(II) at least one ethylenically unsaturated monomer having a polyalkylene oxide radical,
where the liquid component contains at least 1% by weight of the at least one copolymer and at least 30% by weight of an organic solvent.

2. Pulverulent composition according to Claim 1, **characterized in that** the inorganic binder is at least one binder selected from the group consisting of cement based on portland cement, white cement, calcium aluminate cement, calcium sulfoaluminate cement, calcium sulfate n-hydrate and latent hydraulic or pozzolanic binder.

3. Pulverulent composition according to Claim 1 or 2, **characterized in that** the ethylenically unsaturated monomer (I) is represented by at least one of the following general formulae from the group (Ia), (Ib) and (Ic): 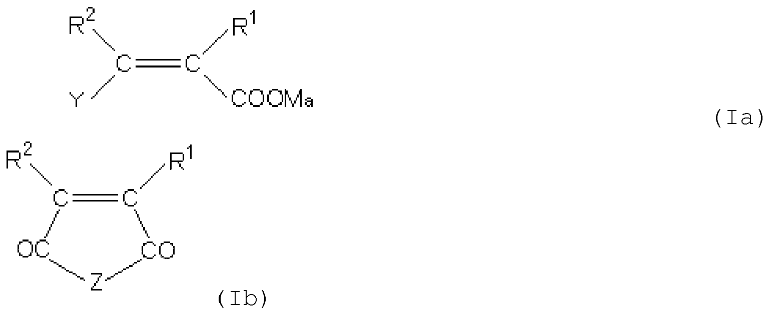 where
R¹ and R² are each, independently of one another, hydrogen or an aliphatic hydrocarbon radical having from 1 to 20 carbon atoms
Y is H, -COOMₐ, -CO-O(C_{q}H_{2q}O)ᵣ-R³, -CO-NH-(C_{q}H_{2q}O)ᵣ-R³,
M is hydrogen, a monovalent or divalent metal cation, ammonium ion or an organic amine radical,
a is 1/2 or 1,
R³ is hydrogen, an aliphatic hydrocarbon radical having from 1 to 20 carbon atoms, a cycloaliphatic hydrocarbon radical having from 5 to 8 carbon atoms, an optionally substituted aryl radical having from 6 to 14 carbon atoms,
the indices q are, independently of one another, identical or different for each (C_{q}H_{2q}O) unit and are each 2, 3 or 4 and
r is from 0 to 200
z is O, NR³, 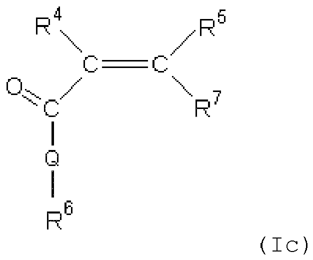
where
R⁴ and R⁵ are each, independently of one another, hydrogen or an aliphatic hydrocarbon radical having from 1 to 20 carbon atoms, a cycloaliphatic hydrocarbon radical having from 5 to 8 carbon atoms, an optionally substituted aryl radical having from 6 to 14 carbon atoms,
the radicals Q are identical or different and are each NH, NR³ or O, where R³ is as defined above,
the radicals R⁶ are identical or different and are each (CₙH₂ₙ) -SO₃H where n = 0, 1, 2, 3 or 4, (CₙH₂ₙ) -OH where n = 0, 1, 2, 3 or 4; (CₙH₂ₙ) -PO₃H₂ where n = 0, 1, 2, 3 or 4, (CₙH₂ₙ) -OPO₃H₂ where n= 0, 1, 2, 3 or 4, (C₆H₄) -SO₃H, (C₆H₄ -PO₃H₂, (C₆H₄-OPO₃H₂ Or (CₙH₂ₙ) -NR⁸_{b} where n = 0, 1, 2, 3 or 4 and b = 2 or 3,
R⁷ is H, -COOMₐ, -CO-O (C_{q}H_{2q}O)ᵣ-R³, -CO-NH-(C_{q}H_{2q}O)ᵣ-R³,
where Mₐ, R³, q and r are as defined above,
R⁸ is hydrogen, an aliphatic hydrocarbon radical having from 1 to 10 carbon atoms, a cycloaliphatic hydrocarbon radical having from 5 to 8 carbon atoms, an optionally substituted aryl radical having from 6 to 14 carbon atoms.

4. Pulverulent composition according to any of Claims 1 to 3, **characterized in that** the ethylenically unsaturated monomer (II) is represented by the following general formula 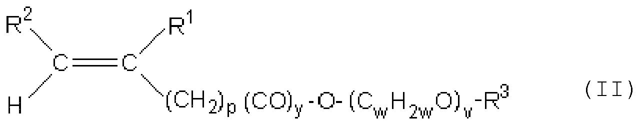 where
p is an integer from 0 to 6,
y is 0 or 1
v is an integer from 3 to 500,
the indices w are, independently of one another, identical or different for each (C_{w}H_{2w}O) unit and are each an integer from 2 to 18,
where R¹, R² and R³ are as defined above.

5. Pulverulent composition according to Claim 4,
**characterized in that**, in the general formula (II),
p is an integer from 0 to 4,
x is an integer from 5 to 500,
the indices w are, independently of one another, identical or different for each (C_{w}H_{2w}O) unit and are each 2 or 3.

6. Pulverulent composition according to any of Claims 1 to 5, **characterized in that** the proportion of the monomer (I) in the copolymer is from 5 to 95 mol%.

7. Pulverulent composition according to any of Claims 1 to 6, **characterized in that** the proportion of the monomer (II) in the copolymer is from 1 to 89 mol%.

8. Pulverulent composition according to any of Claims 1 to 7, **characterized in that** the organic solvent is at least one solvent selected from the group consisting of ethyl acetate, n-butyl acetate, 1-methoxy-2-propyl acetate, ethanol, i-propanol, n-butanol, 2-ethylhexanol, 1-methoxy-2-propanol, ethylene glycol, propylene glycol, acetone, butanone, pentanone, hexanone, methyl ethyl ketone, ethyl acetate, butyl acetate, amyl acetate, tetrahydrofuran, diethyl ether, toluene, xylene and higher-boiling alkylbenzenes, polyethylene glycol ethers and polypropylene glycol ethers and random ethylene oxide-propylene oxide copolymers having an average molar mass in the range from 200 to 2000 g/mol, monoethylene, diethylene or triethylene glycol, monopropylene, dipropylene or tripropylene glycol, methylpolyalkylene, ethylpolyalkylene, propylpolyalkylene, butylpolyalkylene and higher alkylpolyalkylene glycol ethers having 1, 2, 3 or more ethylene glycol and/or propylene glycol units, glycerol ethoxylates having a molecular weight of from 200 to 20 000 g/mol, pentaerythritol alkoxylates, ethylene carbonate, propylene carbonate, glyceryl carbonate, glycerol formal and 2,3-O-isopropylideneglycerol.

9. Pulverulent composition according to any of Claims 1 to 8, **characterized in that** at least 50% by weight of the at least one copolymer of the invention is present in dissolved form in the liquid component.

10. Pulverulent composition according to any of Claims 1 to 9, **characterized in that** it contains from 5 to 99.5% by weight of the inorganic binder.

11. Pulverulent composition according to any of Claims 1 to 10, **characterized in that** the monomer (I) or (II)
comprises a random ethylene oxide-propylene oxide copolymer having a molecular weight of from 160 to 10 000 g/mol.

12. Pulverulent composition according any of Claims 1 to 11, **characterized in that** it is a factory dry mortar, in particular a bricklaying mortar, render mortar, mortar for composite thermal insulation systems, renovation mortar, joint grout, tile adhesive, thin bed mortar, screed mortar, embedding mortar, injection mortar, knifing filler, sealing slurry or lining mortar.

13. Process for producing a liquid component comprising at least 30% by weight of an organic solvent, not more than 30% by weight of water and a copolymer obtained by polymerization of a mixture of monomers comprising
(I) at least one ethylenically unsaturated monomer which comprises at least one radical selected from the group consisting of carboxylic acid, carboxylic acid salt, carboxylic ester, carboxamide, carboxylic anhydride and carboximide
and
(II) at least one ethylenically unsaturated monomer having a polyalkylene ether radical,
**characterized in that** the polymerization of the monomers is carried out in a water-containing solvent, where the water content of the total reaction mixture is more than 10% by weight, the polymerization product is admixed with an organic solvent and water is removed.

14. Use of a liquid component comprising at least 30% by weight of an organic solvent and at least 1% by weight of a copolymer which can be obtained by polymerization of a mixture of monomers comprising
(I) at least one ethylenically unsaturated monomer which comprises at least one radical selected from the group consisting of carboxylic acid, carboxylic acid salt, carboxylic ester, carboxamide, carboxylic anhydride and carboximide
and
(II) at least one ethylenically unsaturated monomer having
a polyalkylene ether radical,
for the treatment of a powder which comprises at least one inorganic binder in order to accelerate homogeneous dispersion of the powder with water, where from 0.01 to 10% by weight of the liquid component, based on the total composition, is used.

## Revendications

1. Composition pulvérulente, pouvant être préparée par mise en contact d'une poudre, qui comprend au moins un liant inorganique, avec 0,01 à 10 % en poids, par rapport à la masse totale de la composition, d'un composant liquide comprenant au moins un copolymère qui peut être obtenu par polymérisation d'un mélange de monomères, comprenant
(I) au moins un monomère à insaturation éthylénique, qui comprend au moins un radical de la série acide carboxylique, sel d'acide carboxylique, ester d'acide carboxylique, carboxamide, anhydride d'acide carboxylique et carboximide
et
(II) au moins un monomère à insaturation éthylénique comportant un radical polyoxyalkylène,
le composant liquide contenant au moins 1 % en poids dudit au moins un copolymère et au moins 30 % en poids d'un solvant organique.

2. Composition pulvérulente selon la revendication 1, **caractérisée en ce que** le liant inorganique consiste en au moins un choisi dans la série ciment à base de ciment Portland, ciment blanc, ciment d'aluminate de calcium, ciment de sulfoaluminate de calcium, sulfate-n-hydrate de calcium et liant pouzzolanique ou hydraulique latent.

3. Composition pulvérulente selon la revendication 1 ou 2, **caractérisée en ce que** le monomère à insaturation éthylénique (I) est représenté par au moins l'une des formules générales suivantes des groupes (Ia), (Ib) et (Ic) 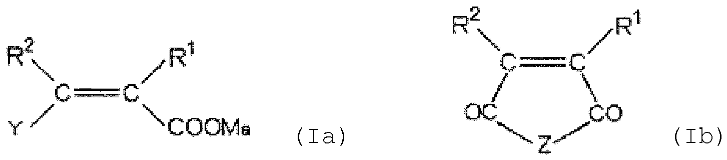 où
R¹ et R² représentent indépendamment l'un de l'autre un atome d'hydrogène ou un radical hydrocarboné aliphatique ayant de 1 à 20 atomes de carbone
Y représente H, -COOMₐ, -CO-O(C_{q}H_{2q}O)ᵣ-R³, -CO-NH-(C_{q}H_{2q}O)ᵣ-R³
M représente un atome d'hydrogène, un cation métallique mono- ou divalent, l'ion ammonium ou un radical d'amine organique
a représente ½ ou 1
R³ représente un atome d'hydrogène, un radical hydrocarboné aliphatique ayant de 1 à 20 atomes de carbone, un radical hydrocarboné cycloaliphatique ayant de 5 à 8 atomes de carbone, un radical aryle éventuellement substitué ayant de 6 à 14 atomes de carbone
q le même ou différent, représente chaque fois indépendamment pour chaque unité (C_{q}H_{2q}O) 2, 3 ou 4 et
r représente 0 à 200
Z représente O, NR³, 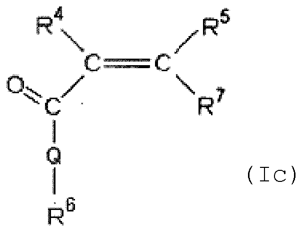
où
R⁴ et R⁵ représentent indépendamment l'un de l'autre un atome d'hydrogène ou un radical hydrocarboné aliphatique ayant de 1 à 20 atomes de carbone, un radical hydrocarboné cycloaliphatique ayant de 5 à 8 atomes de carbone, un radical aryle éventuellement substitué ayant de 6 à 14 atomes de carbone
Q est le même ou différent ainsi que représenté par NH, NR³ ou O ; R³ ayant la signification donnée plus haut
R⁶ est le même ou différent ainsi que représenté par (CₙH₂ₙ)-SO₃H où n = 0, 1, 2, 3 ou 4, (CₙH₂ₙ)-OH où n = 0, 1, 2, 3 ou 4 ; (CₙH₂ₙ)-PO₃H₂ où n = 0, 1, 2, 3 ou 4, (CₙH₂ₙ)-OPO₃H₂ où n = 0, 1, 2, 3 ou 4, (C₆H₄)-SO₃H, (C₆H₄)-PO₃H₂, (C₆H₄)-OPO₃H₂ et (CₙH₂ₙ) -NR⁸_{b} où n = 0, 1, 2, 3 ou 4 et b = 2 ou 3
R⁷ représente H, -COOMₐ, -CO-O(C_{q}H_{2q}O)ᵣ-R³, -CO-NH-(C_{q}H_{2q}O)ᵣ-R³, Mₐ, R³, q et r ayant les significations données plus haut
R⁸ représente un atome d'hydrogène, un radical hydrocarboné aliphatique ayant de 1 à 10 atomes de carbone, un radical hydrocarboné cycloaliphatique ayant de 5 à 8 atomes de carbone, un radical aryle éventuellement substitué ayant de 6 à 14 atomes de carbone.

4. Composition pulvérulente selon l'une quelconque des revendications 1 à 3, **caractérisée en ce que** le monomère à insaturation éthylénique (II) est représenté par la formule générale suivante 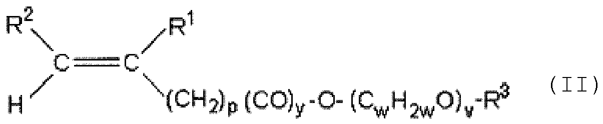 dans laquelle
p représente un nombre entier compris entre 0 et 6
y représente 0 ou 1
v représente un nombre entier compris entre 3 et 500
w le même ou différent chaque fois indépendamment pour chaque unité (C_{w}H_{2w}O), représente un nombre entier compris entre 2 et 18,
R¹, R² et R³ ayant la signification indiquée plus haut.

5. Composition pulvérulente selon la revendication 4, **caractérisée en ce que** dans la formule générale (II)
p représente un nombre entier compris entre 0 et 4
x représente un nombre entier compris entre 5 et 500
w le même ou différent chaque fois indépendamment pour chaque unité (C_{w}H_{2w}O), représente 2 ou 3.

6. Composition pulvérulente selon l'une quelconque des revendications 1 à 5, **caractérisée en ce que** la proportion du monomère (I) dans le copolymère vaut de 5 à 95 % en moles.

7. Composition pulvérulente selon l'une quelconque des revendications 1 à 6, **caractérisée en ce que** la proportion du monomère (II) dans le copolymère vaut de 1 à 89 % en moles.

8. Composition pulvérulente selon l'une quelconque des revendications 1 à 7, **caractérisée en ce que** pour ce qui concerne le solvant organique il s'agit d'au moins un de la série acétate d'éthyle, acétate de n-butyle, acétate de 1-méthoxy-2-propyle, éthanol, isopropanol, n-butanol, 2-éthylhexanol, 1-méthoxy-2-propanol, éthylèneglycol, propylèneglycol, acétone, butanone, pentanone, hexanone, méthyléthylcétone, acétate d'éthyle, acétate de butyle, acétate d'amyle, tétrahydrofurane, oxyde d'éthyle, toluène, xylène ou alkylbenzènes à plus haut point d'ébullition, éthers de polyéthylèneglycol ou éthers de polypropylèneglycol ou copolymères oxyde d'éthylène/oxyde de propylène statistiques ayant une masse moléculaire moyenne comprise entre 200 et 2 000 g/mole, mono-, di- ou triéthylèneglycol, mono-, di- ou tripropylèneglycol, (méthyl-, éthyl-, propyl-, butyl- ou alkyl- à plus haute fonctionnalité)polyalkylèneglycoléthers comportant 1, 2, 3 ou plus de 3 unités éthylèneglycol et/ou propylèneglycol, produits d'éthoxylation de glycérol ayant une masse moléculaire de 200 à 20 000 g/mole, produits d'alcoxylation de pentaérythritol, carbonate d'éthylène, carbonate de propylène, carbonate de glycérol, glycérol formal et 2,3-O-isopropylidèneglycérol.

9. Composition pulvérulente selon l'une quelconque des revendications 1 à 8, **caractérisée en ce que** ledit au moins un copolymère selon l'invention se trouve sous forme dissoute dans le composant liquide en une proportion d'au moins 50 % en poids.

10. Composition pulvérulente selon l'une quelconque des revendications 1 à 9, **caractérisée en ce qu'**elle contient entre 5 et 99,5 % en poids du liant inorganique.

11. Composition pulvérulente selon l'une quelconque des revendications 1 à 10, **caractérisée en ce que** le monomère (I) ou (II) comprend un copolymère oxyde d'éthylène/oxyde de propylène statistique ayant une masse moléculaire de 160 à 10 000 g/mole.

12. Composition pulvérulente selon l'une quelconque des revendications 1 à 11, **caractérisée en ce qu'**il s'agit d'un mortier sec prêt à l'emploi, en particulier de mortier de maçonnerie, mortier pour enduits, mortier pour systèmes composites d'isolation thermique, enduits d'assainissement, mortier de jointoiement, colle à carrelage, mortier pour application en couche mince, mortier pour chapes, mortier de scellement, coulis, mastics, enduits d'étanchéité ou mortier de revêtement.

13. Procédé pour la préparation d'un composant liquide comprenant au moins 30 % en poids d'un solvant organique, au maximum 30 % en poids d'eau ainsi qu'un copolymère obtenu par polymérisation d'un mélange de monomères, comprenant
(I) au moins un monomère à insaturation éthylénique, qui comprend au moins un radical de la série acide carboxylique, sel d'acide carboxylique, ester d'acide carboxylique, carboxamide, anhydride d'acide carboxylique et carboximide
et
(II) au moins un monomère à insaturation éthylénique comportant
un radical polyoxyalkylène-éther,
**caractérisé en ce qu'**on effectue la polymérisation des monomères dans un solvant contenant de l'eau, la teneur en eau du mélange réactionnel dans son ensemble étant supérieure à 10 % en poids, on ajoute un solvant organique au produit de polymérisation et on élimine l'eau.

14. Utilisation d'un composant liquide comprenant au moins 30 % en poids d'un solvant organique et au moins 1 % en poids d'un copolymère qui peut être obtenu par polymérisation d'un mélange de monomères, comprenant
(I) au moins un monomère à insaturation éthylénique, qui comprend au moins un radical de la série acide carboxylique, sel d'acide carboxylique, ester d'acide carboxylique, carboxamide, anhydride d'acide carboxylique et carboximide
et
(II) au moins un monomère à insaturation éthylénique comportant
un radical polyoxyalkylène-éther,
pour le traitement d'une poudre qui comprend au moins un liant inorganique, pour l'accélération de la dispersion homogène de la poudre avec l'eau, en utilisant 0,01 à 10 % en poids du composant liquide, par rapport à la masse totale.
